Europäisches Patentamt

**European Patent Office**

Office européen des brevets

(19)

(11) Veröffentlichungsnummer: **0 057 175**
**B1**

(12) # EUROPÄISCHE PATENTSCHRIFT

(45) Veröffentlichungstag der Patentschrift:
**25.04.84**

(51) Int. Cl.³: **H 01 G 13/00,** H 01 G 4/18

(21) Anmeldenummer: **80901499.6**

(22) Anmeldetag: **04.08.80**

(86) Internationale Anmeldenummer:
**PCT/DE 80/00115**

(87) Internationale Veröffentlichungsnummer:
**WO 82/00542 (18.02.82** Gazette 82/6)

(54) **VORRICHTUNG ZUR HERSTELLUNG VON ÜBEREINANDERLIEGENDEN UND SEITLICH ZUEINANDER VERSETZT ANGEORDNETEN METALLSCHICHTEN UND GLIMMPOLYMERISATSCHICHTEN.**

(43) Veröffentlichungstag der Anmeldung:
**11.08.82 Patentblatt 82/32**

(45) Bekanntmachung des Hinweises auf die Patenterteilung:
**25.04.84 Patentblatt 84/17**

(84) Benannte Vertragsstaaten:
**FR GB**

(56) Entgegenhaltungen:
**US - A - 3 068 510**

(73) Patentinhaber: **SIEMENS AKTIENGESELLSCHAFT, Berlin und München Wittelsbacherplatz 2, D-8000 München 2 (DE)**

(72) Erfinder: **BEHN, Reinhard, Frasdorferstrasse 6d, D-8000 München 90 (DE)**
Erfinder: **KAUFMANN, Kurt, Semperstrasse 21, D-8000 München 83 (DE)**

## Vorrichtung zur Herstellung von übereinanderliegenden und seitlich zueinander versetzt angeordneten Metallschichten und Glimmpolymerisatschichten

Die vorliegende Erfindung betrifft eine Vorrichtung zur Herstellung von übereinanderliegenden und seitlich zueinander versetzt angeordneten Metallschichten und Glimmpolymerisatschichten, welche zwei Vakuumkammern enthält, die durch Vakuumschleusen voneinander getrennt sind, und welche eine Trommel mit Vertiefungen enthält, in denen die Substrate auf Trägern befestigt sind, welche in jeder Vertiefung eine verschiebbare Blende mit einer Blendenöffnung enthält, durch die die jeweils nicht zu beschichtenden Teile der Substrate abgedeckt sind, in welcher diese Trommel zusammen mit Schleusenbacken die Vakuumschleusen bildet, so daß die Träger beide Vakuumkammern durchlaufen, und in welcher in einer ersten Vakuumkammer eine Einrichtung zur Herstellung von Glimmpolymerisatschichten und in einer zweiten Vakuumkammer Metallisierungseinrichtungen angebracht und Einrichtungen zur Verschiebung der Blenden zwischen den Einrichtungen zur Herstellung der Glimmpolymerisatschichten und den Metallisierungseinrichtungen angeordnet sind.

Eine derartige Vorrichtung wurde an anderer Stelle bereits vorgeschlagen. Die Aufgabe, die der vorliegenden Erfindung zugrundeliegt, besteht darin, daß die Blenden gegenüber den zu beschichtenden Substraten auf einfache Weise in definierte Stellungen gebracht werden und daß diese Stellungen mit hoher Genauigkeit reproduzierbar sind.

Diese Aufgabe wird bei einer Vorrichtung der eingangs beschriebenen Art dadurch gelöst, daß die Trommel teilweise von zumindest einem feststehenden Kurvenring umschlossen wird, daß die Trommel zumindest einen Stößel enthält, welcher durch eine Feder gegen den Kurvenring gedrückt wird, daß der Kurvenring Ausnehmungen aufweist, daß der Stößel diese Ausnehmungen bei der Drehung der Trommel durchläuft, daß der Stößel mit einer Einrichtung zur seitlichen Verschiebung des Trägers in funktioneller Verbindung steht und daß jeweils zwischen einer Glimmpolymerisationsstrecke und einer Metallisierungsstrecke die Verschiebung durch die Ausnehmungen im Kurvenring hervorgerufen wird.

Diese Vorrichtung ist relativ einfach aufgebaut, da die den Betrag der Verschiebung und deren Richtung bestimmenden Teile der Verschiebungseinrichtung mit dem Träger verbunden sind, so daß die Toleranzen der Trommel hierfür keine Rolle spielen. Über den Stößel und ein Klinkenrad wird in einem weiten Bereich der Trommeltoleranzen stets genau eine Stufe weitergeschaltet. Außerdem lassen sich die Träger von der Trommel entfernen, unabhängig von der Trommel bestücken und wieder einsetzen. Die Reproduzierbarkeit der gegenseitigen Lage von Blende und Substrat wird dadurch nicht beeinflußt. Die Kurvenringe gewährleisten eine genaue Lage der Vertiefungen zueinander und zu den übrigen Teilen der Vorrichtung, so daß der für die Blendenverschiebung erforderliche Anteil des Umfangs der Trommel, der für eine Beschichtung nicht genutzt werden kann, klein gehalten werden kann.

Zur Herstellung von Schichtkondensatoren, bei denen Metallschichten von verschiedener Polarität und dazwischenliegende Dielektrikumsschichten aus Glimmpolymerisat aufgebracht werden sollen, ist es zweckmäßig, daß die Substrate gegenüber den Blenden in einer zu keiner der Kanten der Blendenöffnung parallelen Richtung verschoben werden. Dadurch entsteht eine allseitige gegenseitige Isolation der gegenpoligen Beläge. Bei der Verschiebung des Substrates gegenüber der Blende darf andererseits das bereits aufgebrachte Schichtpaket nicht beschädigt werden. Dieses erhebt sich im Bereich der Glimmpolymerisatschichten deutlich über seine Umgebung. Andererseits soll die Glimmpolymerisatschicht durch eine auf dem Substrat aufliegende Blende begrenzt werden, damit Ausläufer der Isolationsschicht nicht in den Bereich der Kontaktierung der Beläge reichen können. Um diese Forderungen zu realisieren, muß die Blende zumindest während der Glimmpolymerisation auf dem Substrat bzw. der obersten bereits aufgebrachten Schicht aufliegen und während der Verschiebung des Substrats gegenüber der Blende von dem Substrat abgehoben werden. Dies erfolgt vorteilhaft in einer Ausführungsform der vorgeschlagenen Vorrichtung, welche zwei Kurvenringe enthält, welche im Bereich der beiden Stirnflächen der Trommel angeordnet sind, in welcher zumindest einer der Kurvenringe die Vertiefungen zur Steuerung des Stößels enthält, in welcher beide Kurvenringe weitere Vertiefungen enthalten, in welcher die Blende mit zwei Gleitstiften mechanisch fest verbunden ist, welche durch Federkraft gegen je einen Kurvenring gedrückt werden und bei der Drehung der Trommel durch die weiteren Vertiefungen laufen und in welcher die weiteren Vertiefungen so dimensioniert sind, daß die Blende vor der Verschiebung des Trägers angehoben und nach der Verschiebung des Trägers wieder gegen das Substrat gedrückt wird.

Durch diese Aufteilung der Bewegung in eine einfache Auf- und Abbewegung der Blende und eine Verschiebung des Substrats wird der Bewegungsablauf und damit die Vorrichtung einfach gestaltet und eine hohe Präzision gewährleistet.

Die Kraftübertragung zur Verschiebung des Substrathalters erfolgt vorteilhaft dadurch, daß der Stößel im Bereich einer Vertiefung gegen ein Klinkenrad mit einer zur Trommelachse zumindest annähernd parallelen Achse gedrückt wird und dadurch das Klinkenrad um eine Klinke weiterdreht, daß mit diesem Klinkenrad eine Kurvenscheibe mechanisch fest verbunden ist, deren eine Stirnfläche ein Profil aufweist, welches von einem Abtaststift des Trägers abgetastet wird und die gewünschte Verschiebung des Trägers unmittelbar bewirkt. Die Kurvenscheibe ist vorteilhaft so ausgebildet, daß die Kurve auf ihrer Stirnfläche zur Verschiebung des Abtaststiftes Flächen bildet, welche auf die durch mechanische Führungen festgelegte Bewegungsrichtung des Abstandstiftes zumindest annähernd senkrecht stehen. Durch diese Ausführungsform wird die Bewegung des Abstandstiftes durch einen geringen Kraftaufwand erreicht, das Material wird wenig beansprucht, die Vorrichtung kann entsprechend leicht dimensioniert werden.

Die Erfindung wird nun anhand von drei Figuren näher erläutert.

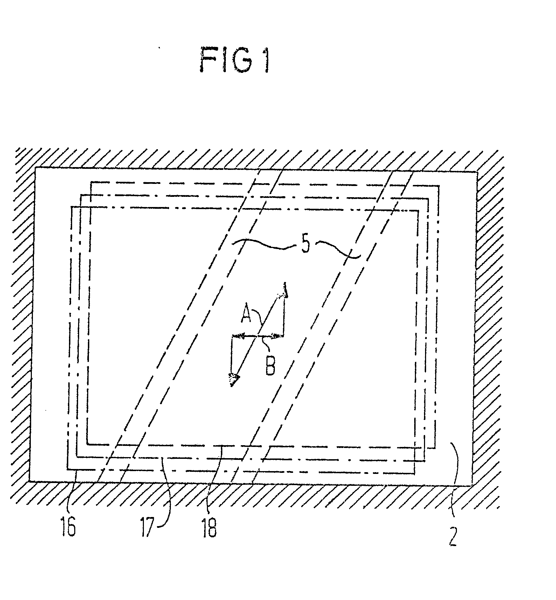

Fig. 1 zeigt die Stellungen des Substrates unter der in seitlicher Richtung feststehenden Blende schematisch;

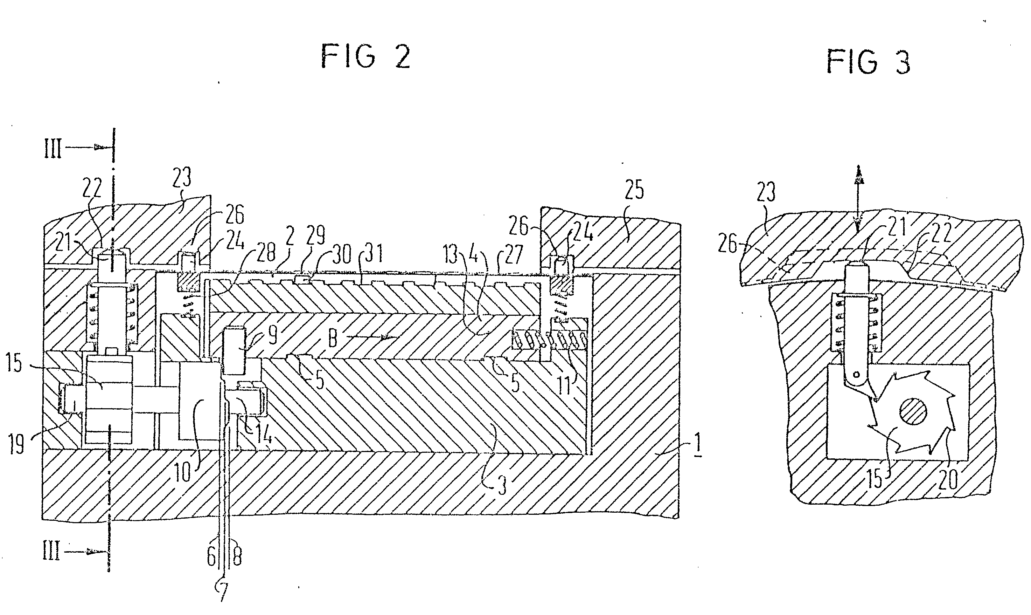

Fig. 2 zeigt eine erfindungsgemäße Vorrichtung in teilweise geschnittener und gebrochener Ansicht;

Fig. 3 zeigt einen Schnitt durch Fig. 2 in teilweise gebrochener Ansicht.

Eine Trommel 1 enthält Vertiefungen 2, in denen Einsätze 3 untergebracht sind. Auf den Einsätzen 3 sind Träger 4 verschiebbar befestigt. Eine Verschiebung der Träger 4 kann in der Pfeilrichtung A erfolgen. Die Pfeilrichtung A ist durch Nocken 5 auf dem Einsatz 3 und entsprechende Nuten im Träger 4 festgelegt. Die Lage des Trägers 4 ist über einen Führungsstift 9 durch eine Kurvenscheibe 10 bestimmt. Durch Drehung der Kurvenscheibe 10 um ihre Achse wird der Führungsstift 9 in einer vorgegebenen Folge an die Flächen 6 bis 8 der Kurvenscheibe 10 angelegt und durch eine Feder 11 gegen diese Flächen gedrückt. Die Feder 11 ist in einer Bohrung des Einsatzes 3 gehalten. Jeder Fläche 6 bis 8 der Kurvenscheibe 10 entspricht eine Stellung 16 bis 18 des Trägers 4.

Die Kurvenscheibe 10 ist mit einem Klinkenrad 15 kraftschlüssig verbunden, beispielsweise auf eine gemeinsame Achse 19 aufgepreßt.

Das Klinkenrad 15 wird über einen Stößel 21 jeweils um eine Klinke 20 weitergedreht, wenn der Stößel 21 eine Vertiefung 22 eines feststehenden Kurvenringes 23 durchläuft.

Der Kurvenring 23 und ein Kurvenring 25 umschließen die Trommel 1 im Bereich ihrer beiden Stirnseiten. Der Kurvenring 23 enthält auf einem gemeinsamen Umfangskreis liegende Vertiefungen 22 und auf einem anderen Umfangskreis liegende Vertiefungen 26. Bei der Drehung der Trommel 1 werden die Vertiefungen 22 von Stößeln 21 durchlaufen, während die Vertiefungen 26 durch Gleitstifte 24 durchlaufen werden, welche mit einer Blende 27 mechanisch fest verbunden sind, die gegenüber der Trommel 1 in radialer Richtung beweglich ist. Die Vertiefungen 26 sind so relativ zu den Vertiefungen 22 angeordnet, daß die Gleitstifte 24 vor dem Stößel 21 in die entsprechenden Vertiefungen gleiten und nach dem Stößel 21 aus den Vertiefungen wieder herausgedrückt werden. Federn 28 drücken die Gleitstifte gegen die Kurvenringe 23 bzw. 25. Der Kurvenring 25 weist ebenfalls Vertiefungen 26 auf, welche Gleitstifte 24 auf den entsprechenden Blendenrand durchlaufen.

Die Blendenöffnungen 29 liegen über den Substraten 30, welche in entsprechenden Ausnehmungen 31 des Trägers 4 angeordnet sind.

Der Träger 4 wird durch die Drehung der Kurvenscheibe 10 in Richtung A bewegt. Die Flächen 6 bis 8 der Kurvenscheibe 10 entsprechen der Komponente der Bewegung in Richtung B, welche der Richtung der Achse 19 entspricht. Um die Bewegung in Richtung A ohne besondere Reibungskräfte ablaufen zu lassen, weist die Kurvenscheibe Flächen 14 auf, die zu der Bewegungsrichtung A annähernd senkrecht stehen. Die Blendenöffnungen 29 sind vorzugsweise rechteckförmig. Die Bewegungsrichtung A ist zu keiner Kante der Blendenöffnungen 29 parallel.

Die Kurvenringe 23 und 25 dienen gleichzeitig als Abschluß der Vakuumkammer in Richtung der Trommelachse und somit als Vakuumschleusen. Daher ist in dem gezeigten Beispiel der Stößel 21 nicht in den Einsatz 3, sondern unmittelbar in die Trommel 1 eingebaut. So kann die hohe Präzision des Trommelumfangs als Vakuumschleuse ausgenutzt und trotzdem ein zusätzlicher Platzbedarf für die Steuerung des Stößels 21 vermieden werden, was bei der Anordnung des Stößels im Einsatz 3 nicht möglich wäre, da der Einsatz 3 Einbautoleranzen erfordert, so daß die durch diesen Einsatz gebildeten Flächen als Teil einer Vakuumschleuse nicht zu einem gleichmäßigen, hohen Vakuum führen würde.

## Patentansprüche

1. Vorrichtung zur Herstellung von übereinanderliegenden und seitlich zueinander versetzt angeordneten Metallschichten und Glimmpolymerisatschichten, welche zwei Vakuumkammern enthält, die durch Vakuumschleusen voneinander getrennt sind, welche eine Trommel mit Vertiefungen enthält, in denen die Substrate auf Trägern befestigt sind, welche in jeder Vertiefung eine verschiebbare Blende mit Blendenöffnung enthält, durch die die jeweils nicht zu beschichtenden Teile der Substrate abgedeckt sind, in welcher diese Trommel zusammen mit Schleusenbacken die Vakuumschleusen bildet, so daß die Träger beide Vakuumkammern durchlaufen, und in welcher in einer ersten Vakuumkammer Einrichtungen zur Herstellung von Glimmpolymerisatschichten und in einer zweiten Vakuumkammer Metallisierungseinrichtungen angebracht und Einrichtungen zur Verschiebung der Blenden zwischen den Einrichtungen zur Herstellung der Glimmpolymerisatschichten und den Metallisierungseinrichtungen angeordnet sind, dadurch gekennzeichnet, daß die Trommel (1) teilweise von zumindest einem feststehenden Kurvenring (23, 25) umschlossen wird, daß die Trommel (1) zumindest einen Stößel (21) enthält, welcher durch eine Feder gegen den Kurvenring (23) gedrückt wird, daß der Kurvenring (23) Ausnehmungen (22) aufweist, daß der Stößel (21) diese Ausnehmungen (22) bei der Drehung der Trommel (1) durchläuft, daß der Stößel (21) mit einer Einrichtung (10) zur seitlichen Verschiebung des Trägers in funktioneller Verbindung steht und daß jeweils zwischen einer Glimmpolymerisationsstrecke und einer Metallisierungsstrecke die Verschiebung durch die Ausnehmungen (22) im Kurvenring (23) hervorgerufen wird.

2. Vorrichtung nach Anspruch 1, dadurch gekennzeichnet, daß sie zwei Kurvenringe (23, 25) enthält, welche im Bereich der beiden Stirnflächen der Trommel (1) angeordnet sind, daß zumindest einer dieser Kurvenringe (23) die Vertiefungen (22) zur Steuerung des Stößels (21) enthält, daß beide Kurvenringe (23, 25) weitere Vertiefungen (26) enthalten, daß die Blende (27) mit zwei Gleitstiften (24) mechanisch fest verbunden ist, welche durch Federkraft gegen je einen Kurvenring (23, 25) gedrückt werden und bei der Drehung der Trommel (1) durch die weiteren Vertiefungen (26) laufen und daß die weiteren Vertiefungen (26) so dimensioniert sind, daß die Blende (27) vor der Verschiebung des Trägers (4) angehoben und nach der Verschiebung des Trägers (4) wieder gegen die Substrate (30) gedrückt wird.

3. Vorrichtung nach Anspruch 2, dadurch gekennzeichnet, daß der Stößel (21) im Bereich einer Vertiefung (22) ein Klinkenrad (15) um eine Klinke (20) weiterdreht, daß mit diesem Klinkenrad (15) eine Kurvenscheibe (10) mechanisch fest verbunden ist, deren eine Stirnfläche ein Profil aufweist, welches von einem Abtaststift (9) des Trägers (4) abgetastet wird und die gewünschte Verschiebung des Trägers (4) unmittelbar hervorruft.

4. Vorrichtung nach Anspruch 3, dadurch gekennzeichnet, daß die Kurve auf der Stirnfläche der Kurvenscheibe (10) zur Verschiebung des Abtaststiftes (9) Flächen (14) bildet, welche auf die durch mechanische Führungen (5) festgelegte Bewegungsrichtung (A) des Abtaststiftes (9) zumindest annähernd senkrecht stehen.

## Claims

1. Apparatus for the production of metal layers and glow polymerisate layers which are arranged one on another and laterally displaced relative to one another, which apparatus includes two vacuum chambers which are separated from one another by vacuum locks, which includes a drum provided with recesses in which the substrates are fixed on carriers, which, in each recess, contains a movable diaphragm-having a diaphragm opening by means of which those parts of the substrates which are not to be coated are covered, in which this drum together with sluice cheeks forms the vacuum locks, so that the carriers pass through both the vacuum chambers, and in which devices for the production of glow polymerisate layers are arranged in a vacuum chamber and metallizing devices are arranged in a secound vacuum chamber, and devices for moving the diaphragms are arranged between the devices for producing the glow polymerisate layers and the metallizing devices, characterised in that the drum (1) is partially surrounded by at least one stationary cam ring (23, 25); that the drum (1) contains at least one tappet (21) which is pressed by a spring against the cam ring (23); that the cam ring (23) contains recesses (22); that the tappet (21) traverses these recesses (22) when the drum (1) is rotated; that the tappet (21) is functionally connected to a device (10) which serves to displace the carrier laterally; and that in each case between a glow polymerisation section and a metallizing section, the displacement is effected by means of the recesses (22) in the cam ring (23).

2. Apparatus according to Claim 1, characterised in that it includes two cam rings (23, 25) which are arranged in the region of the two end faces of the drum (1); that at least one of these cam rings (23) contains the recesses (22) for the control of the tappet (21); that both the cam rings (23, 25) contain further recesses (26); that the diaphragm (27) is mechanically fixedly connected to two slide pins (24) which are each pressed by spring force against a respective cam ring (23, 25) and when the drum (1) is rotated traverse the further recesses (26); that the further recesses (26) are so dimensioned that, prior to the displacement of the carrier (4), the diaphragm (27) is raised and after the displacement of the carrier (4), it is again pressed against the substrates (30).

3. Apparatus according to Claim 2, characterised in that, in the region of a recess (22), the tappet (21) advances a ratchet wheel (15) by one tooth (20); that this ratchet wheel (15) is mechanically fixedly connected to a cam disc (10) whose end face has a profile which is followed by a follower pin (9) of the carrier (4) and directly effects the desired displacement of the carrier (4).

4. Apparatus according to Claim 3, characterised in that, at the end face of the cam disc (10) for the displacement of the follower pin (9), the cam forms surfaces (14) which are at least approximately at right angles to the direction of movement (A) of the follower pin (9) which is determined by mechanical guides (5).

## Revendications

1. Dispositif pour la fabrication de couches métalliques et de couches de polymère obtenu par polymérisation sous effluve superposées et décalées latéralement les unes par rapport aux autres, qui comporte deux chambres à vide qui sont séparées l'une de l'autre par des sas à vide, et qui comporte un tambour muni de renfoncements dans lesquels les substrats sont fixés sur des supports, et contenant, dans chaque renfoncement, un diaphragme déplaçable muni d'une ouverture et recouvrant les parties du substrat ne devant pas être revêtues, dans lequel ce tambour forme avec des cloisons de sas, les sas à vide de telle sorte que les supports passent les deux chambres à vide, et dans lequel un dispositif pour fabriquer des couches de polymère obtenu par polymérisation sous effluve est monté dans une première chambre à vide, et un dispositif pour la fabrication de couches de métallisation est monté dans une seconde chambre à vide et il est prévu des dispositifs pour déplacer les diaphragmes entre les dispositifs servant à fabriquer les couches de polymère obtenu par polymérisation sous effluve et les dispositifs de métallisation, caractérisé par le fait que le tambour (1) est entouré partiellement par au moins un anneau fixe à came (23, 25), que le tambour (1) contient au moins un poussoir (21) qui est repoussé par un ressort contre l'anneau à came (23), que l'anneau à came (23) comporte des évidements (22), que le poussoir (21) passe dans ces évidements (22) lors de la rotation du tambour (1), que le poussoir (21) est relié selon une liaison fonctionelle à un dispositif (10) servant à décaler latéralement le support et que le décalage est provoqué par les évidements (22) ménagés dans l'anneau à came (23) entre une voie de dépôt du polymère obtenu par polymérisation sous effluve et une voie de métallisation.

2. Dispositif suivant la revendication 1, caractérisé par le fait qu'il contient deux anneaux à came (23, 25) qui sont disposés au voisinage des deux faces frontales du tambour (1), qu'au moins l'un de ces anneaux à came (23) comporte les renfoncements (22) servant à la commande du poussoir (21), que les deux anneaux à came (22, 23) comportent des renfoncements supplémentaires (26), que le diaphragme (27) est relié selon une liaison mécanique rigide à deux tétons coulissants (24) qui sont repoussés par la force d'un ressort respectivement contre les anneaux à came (23, 25) et passent dans les renforcements (26) et que ces renfoncements supplémentaires (26) sont dimensionnés de telle sorte que le diaphragme (27) est soulevé avant le décalage du support (4) et est repoussé à nouveau contre les substrats (30) après le décalage du support (4).

3. Dispositif suivant la revendication 2, caractérisé par le fait qu'au voisinage d'un renfoncement (22), le poussoir (21) fait tourner une roue à cliquet (15) d'un cran (20), qu'à cette roue à cliquet (15) est relié, selon une liaison mécanique rigide, un disque à cames (10) dont une face frontale possède un profil qui est exploré par un téton d'exploration (9) du support (4) et provoque directement le décalage désiré du support (4).

4. Dispositif selon la revendication 3, caractérisé par le fait que la came située sur la face frontale du disque à cames (10) et servant à déplacer le téton d'exploration (9) forme des surfaces (14) qui sont au moins approximativement perpendiculaires à la direction de déplacement (A) du téton d'exploration (9), déterminée par des guides mécaniques (10).

## FIG 1

FIG 2 FIG 3

FIG 2

FIG 3

0 057 175